# EUROPÄISCHE PATENTSCHRIFT

(11) **EP 0 569 714 B1**
(45) Veröffentlichungstag und Bekanntmachung des Hinweises auf die Patenterteilung: **21.06.1995**
(21) Anmeldenummer: 93105932.3
(22) Anmeldetag: 13.04.1993
(51) Int. Cl.: F02B 27/02

(54) **Luftansaugvorrichtung für eine Brennkraftmaschine**
Air intake device for an internal combustion engine
Dispositif d'admission d'air pour un moteur à combustion interne

(30) Priorität: 11.05.1992 DE 4215417
(43) Veröffentlichungstag der Anmeldung: 18.11.1993
(73) Patentinhaber: Dr.Ing.h.c. F. Porsche Aktiengesellschaft, 70435 Stuttgart (DE)
(72) Erfinder: Rutschmann, Erwin, W-7533 Tiefenbronn (DE); Theilemann, Ludwig, Dr., W-7135 Wiernsheim 4 (DE); Gröger, Klaus, W-7251 Hemmingen (DE)

(56) Entgegenhaltungen:
- DE-A- 3 416 950
- DE-A- 3 843 690
- FR-A- 2 378 183
- PATENT ABSTRACTS OF JAPAN vol. 9, no. 249 (M-419)5. Oktober 1985 & JP-A-60 101 220
- PATENT ABSTRACTS OF JAPAN vol. 9, no. 142 (M-388)18. Juni 1985 & JP-A-60 022 021

## Beschreibung

Die Erfindung betrifft eine Luftansaugvorrichtung für eine mehrzylindrige Brennkraftmaschine gemäß dem Oberbegriff des Patentanspruches 1.

Die Drehmomentverläufe von mit konventionellen Ansauganlagen versehenen Brennkraftmaschinen weisen insbesondere bei vierzylindrigen Brennkraftmaschinen Einbrüche auf, zumeist in mittleren Drehzahlbereichen.

In der gattungsgemäßen DE-34 16 950 A1 ist eine Luftansauganlage mit einem parallel zu einer in einen Saugverteiler mündenden Ansaugleitung angeordneten, nicht durchstömten Behälter offenbart, der stromauf ständig mit der Ansaugleitung verbunden ist und stromab zusätzlich mittels einer verschließbaren Öffnung ankoppelbar ist. Zur Steigerung der Brennkraftmaschinenleistung ist in der verschließbaren Öffnung ein von einer Steuerung in Abhängigkeit von Brennkraftmaschinen-Parametern betätigtes Ventil angeordnet. Die Drosselklappe zur Leistungsteigerung der Brennkraftmaschine ist stromab der verschließbaren Öffnung in der Ansaugleitung angeordnet.

Aus der EP-O 278 117 A2 ist eine Luftansauganlage mit insgesamt drei Sammelbehältern bekannt. Ein erster Sammelbehälter ist mittels Einzelsaugrohren an Zylinder der Brennkraftmaschine angeschlossen und steht über ein Verbindungsrohr mit einem stromauf gelegenen zweiten Behälter in Verbindung, in den die angesaugte Frischluft einströmt. Ein dritter, nicht durchströmter Behälter ist mit einem Rohrstutzen parallel an den zweiten Behälter angeschlossen.

Bei einer vorbestimmten Resonanzdrehzahl der Brennkraftmaschine sind die durch die nicht kontinuierliche Saugwirkung der Zylinder in dem Verbindungsrohr und dem Rohrstutzen angeregten Luftschwingungen phasengleich, wodurch der Liefergrad verbessert werden soll. Der zweite Behälter ist derartig ausgelegt, daß bei einer zweiten vorbestimmten Resonanzdrehzahl diese Schwingungen gegenphasig sind, wodurch der Liefergrad ebenfalls gesteigert werden soll.

Der Erfindung liegt die Aufgabe zugrunde, eine Luftansaugvorrichtung für eine mehrzylindrige Brennkraftmaschine zu schaffen, die Einbrüche im von der Brennkraftmaschinendrehzahl abhängigen Drehmomentverlauf weitestgehend vermeidet. Zusätzlich soll diese Vorrichtung einen geringstmöglichen Bauraum beanspruchen.

Die Lösung dieser Aufgabe gelingt mit den Merkmalen des Patentanspruchs 1.

Vorteilhafte Ausgestaltungen sind durch die Merkmale der Unteransprüche gekennzeichnet.

Wenn bei einer Brennkraftmaschine die Eigenfrequenz der Luftansaugvorrichtung nicht mit der durch die Ansaugtakte erzwungenen Ansaugfrequenz übereinstimmt, so kann die Eigenfrequenz des Systemes verschoben und die Höhe der Druckamplituden dadurch vergrößert werden, daß ein Saugverteiler mit einem als Helmholtzresonator wirkenden Behälter über einen Stutzen in Verbindung steht, wobei an den Stutzen ein im wesentlichen innerhalb des Behälters verlaufendes Resonanzrohr angeschlossen ist. Vorteilhafterweise wird die Füllung in den Brennräumen der Brennkraftmaschine durch die vergrößerten Druckamplituden erhöht. Diese Erhöhung wird durch ein Abrufen der im Helmholtzresonator gespeicherten Energie zum optimalen Zeitpunkt, d.h. im üblicherweise einen Drehmomenteinbruch aufweisenden Drehzahlbereich, erzielt. Die Phasenlage der Schwingungen kann durch Änderung der Eigenfrequenz der Luftansauganlage optimal eingestellt werden. Diese Änderung wird durch das variable Ankoppeln von zusätzlichen Volumina erzielt. Der Behälter ist mit einer eine erste und eine zweite Kammer begrenzenden Trennwand versehen, wobei die Öffnung des Resonanzrohres innerhalb der ersten Kammer angeordnet ist. Die Trennwand weist eine Absperrmittel aufnehmende Verbindungsöffnung auf.

Weiterhin vorteilhaft ist die Tatsache, daß die erfindungsgemäße Luftansauganlage bereits zuvor günstige verlaufende Drehmomentbereiche nicht beeinflußt, sie wirkt gezielt nur in zuvor drehmomentschwachen Drehzahlbereichen.

Eine Bauraum sparende Anordnung wird im wesentlichen dadurch erzielt, daß das Resonanzrohr innerhalb des Helmholtzresonators verläuft. Hierdurch kann der Resonator in kompakter, benachbarter Lage zum Saugverteiler angeordnet werden.

Die Erfindung Wird nachfolgend beispielhaft anhand einer Zeichnung näher erläutert.

Es zeigen:
- Fig. 1: eine teilweise geschnittene Draufsicht auf eine Luftansaugvorrichtung gemäß der Erfindung und

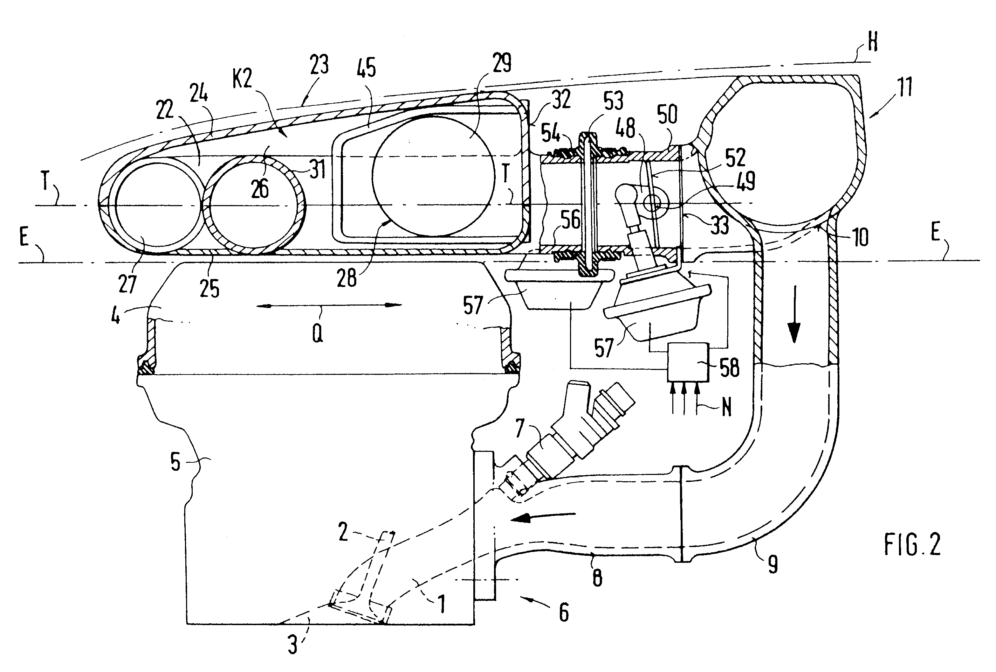

- Fig. 2: einen Schnitt entlang der Linie II-II gemäß Fig. 1.

Eine vierzylindrige Reihen-Brennkraftmaschine weist einen mit Einlaßkanälen 1, Einlaßventilen 2, Brennräumen 3 und einer Zylinderkopfhaube 4 versehenen Zylinderkopf 5 auf.

An eine Einlaßseite 6 des Zylinderkopfes 5 ist ein Einspritzventile 7 aufnehmender Zwischenflansch 8 angeschraubt, an welchen sich eingangseitig Einzelsaugrohre 9 anschließen. Diese Saugrohre 9 erstrecken sich von einer Unterseite 10 eines Sauvertreilers 11 aus bis an den Zwischenflansch 8. Der Saugverteiler 11 ist im wesentlichen hohlzylindrisch ausgebildet und erstreckt sich parallel zur Längserstreckung L der Brennkraftmaschine oberhalb einer die Zylinderkopfhaube begrenzenden Ebene E-E. An eine eingangsseitig angeordnete Öffnung 12 des Saugverteilers 11 ist unter Zwischenschaltung eines eine Drosselklappe 13 aufweisenden Klappenstutzens 14 eine Ansaugleitung 15 angeschlossen, welche Umgebungsluft über einen Luftfilter 16 ansaugt.

In einer ersten Variante der Erfindung weist der Saugverteiler 11 benachbart seinem stromabseitigen Ende 17 eine der Einlaßseite 6 zugewandte Verbindungsöffnung 20 auf, an die unter Zwischenschaltung eines als Stutzen ausgebildeten Klappengehäuses 21 ein Resonanzrohr 22 angeschlossen ist. Dieses Rohr 22 verläuft im wesentlichen innerhalb eines als Helmholtzresonator ausgebildeten Behälters 23, welcher eng benachbart der Zylinderkopfhaube 4 zwischen der Ebene E-E und einer Motorhaubenlinie M einerseits und andererseits in Längserstreckung L angeordnet ist.

Der Behälter 23 wird aus einer Ober- und einer Unterschale 24 und 25 gebildet, welche in einer zur Ebene E-E parallel verlaufenden Trennebene T-T miteinander verbunden sind. Innerhalb des Behälters 23 ist in einer Quererstreckung Q eine Trennwand 26 angeordnet, welche eine erste, kleinere Kammer K1 und eine größere, zweite Kammer K2 voneinander trennt. Die Kammem K1 und K2 sind in Längserstreckung L hintereinander angeordnet. Eine endseitige Öffnung 27 des Resonanzrohres 22 liegt innerhalb der Kammer K1.

Beide Kammern K1 und K2 stehen über eine in der Trennwand 26 angeordnete Verbindungsöffnung 28, in der eine als Absperrmittel wirkenden Steuerklappe 29 angeordnet ist, in Verbindung.

Eine zweite Variante der Erfindung weist zusätzlich zu der zuvor beschriebenen Variante ein zweites, innerhalb des Behälters 23, mit einer in der Kammer 1 liegenden, endseitigen Öffnung 30 versehenes Resonanzrohr 31 auf.
Dieses Rohr 31 durchdringt die Trennwand 26 sowie eine Behälterwand 32 und ist dort mit einem zwischen dieser Wand 32 und einer weiteren Verbindungsöffnung 33 des Saugverteilers 11 angeordneten, ein Klappengehäuse 34 aufweisenden Stutzen verbunden.

Die Resonanzrohre 22 und 31 sind jeweils hälftig in die Ober- bzw. Unterschale 24 bzw. 25 eingelegt und auf ihren einander zugewandten Seiten mittels einer im Bereich der Behälterwand 32 angeordneten Nut 35 an der Wand 32 verklebt. Ein erster, geradlinig verlaufender Abschnitt 36 des ersten Resonanzrohres 22 verläuft in Anlage mit einer endseitigen Querwand 37 des Behälters 23 und weist daher in diesem Bereich eine in eine Nut 38 der Querwand 37 eingreifende Nase 39 auf.

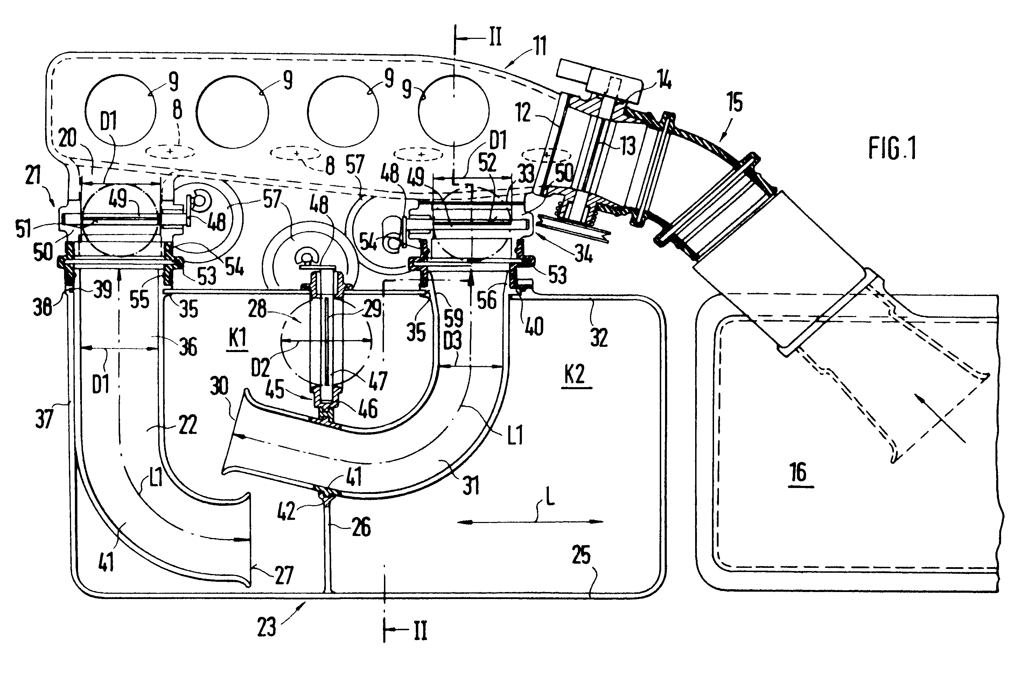

Als Alternative dazu können die Resonanzrohre 22 und 31 gemäß der in Fig. 1, am Resonanzrohr 31 rechts gezeigten Ausführung mit einem umlaufenden Flansch 40 versehen an die Behälterwand 32 geschraubt werden.

Im Anschluß an den Abschnitt 36 ist das Resonanzrohr 22 mit einem in Richtung auf die Trennwand 26 verlaufenden Krümmerabschnitt 41 versehen. Das Resonanzrohr 31 verläuft im wesentlichen gekrümmt innerhalb des Behälters 23.
Diese gekrümmte Anordnung beider Resonanzrohre 22 und 31 ermöglicht die Unterbringung der erforderlichen Rohrlängen in kompakter Weise innerhalb des Behälters 23.

Der Durchtritt des Resonanzrohres 31 durch die Trennwand 26 ist ebenfalls mit einer rohrseitigen Nase 42 und einer wandseitigen Nut 43 ausgeführt.

Die Steuerklappe 29 ist in einem vormontierten Einsatz 45 gehalten, welcher ein Gestell 46, eine Klappenwelle 47, die Steuerklappe 29 und einen auf der Welle 47 befestigten Hebel 48 aufweist.

Die Klappengehäuse 21 und 34 sind als Gleichteile ausgebildete und weisen, dem Einsatz 45 vergleichbar, Klappenwellen 49, ein Gestell 50, Hebel 48 und dem ersten bzw. zweiten Resonanzrohr 22 bzw. 31 zugeordnete erste bzw. zweite Drehklappen 51 bzw. 52 auf. Die Gestelle 50 sind mit eine schwingungsentkoppelnde und toleranzausgleichende Quetschfalte 53 aufweisenden Gummimuffen 54 auf Rohrenden 55, 56 der Resonanzrohre 22, 31 geschoben. An den Hebeln 48 greifen Druckdosen 57 an, welche mit einer schematisch gezeigten Betätigungsvorrichtung 58 verbunden sind. Diese Vorrichtung 58 verarbeitet ein Drehzahlsignal N der Brennkraftmaschine und umfaßt unterdruckbeaufschlagte Ventile, welche die Druckdosen 57 separat derart ansteuern, daß die Klappen 29, 51 und 52 in ihre strichpunktiert gezeichnete, geöffnete Stellung verschwenkt werden.

Die Drehklappen 51 und 52 weisen einen identischen Durchmesser D1 auf, die Steuerklappe 29 einen größeren Durchmesser D2. Resonanzrohr 22 weist den Innendurchmesser D1 und eine Länge L1 auf, während sich Resonanzrohr 31 entlang eines konischen Abschnittes 59 vom Durchmesser D1 auf einen kleineren Durchmesser D3 verringert und ebenfalls die Länge L1 aufweist.

Im Betrieb der Brennkraftmaschine wird über die Ansaugleitung 15 Luft aus dem Luftfilter 16 angesaugt und im Volumenstrom von der Drosselklappe 13 gesteuert dem Saugverteiler 11 zugeführt.

In einem niedrigen Drehzahlbereich liefert die Ansaugvorrichtung bei abgekoppeltem Behälter 23 ein ausreichendes Drehmoment.

Bei der ersten Variante der Erfindung steuert ab Erreichen eines mittleren Drehzahlbereiches die Betätigungsvorrichtung 58 die dem ersten Klappengehäuse 21 zugeordnete Druckdose 57 die Drehklappe 51 öffnend an. Die Steuerklappe 29 ist geöffnet, so daß das gesamte Volumen der Kammern K1 und K2, z.B. 3 Liter, als Resonanzvolumen zur Verfügung steht. Bei einer Länge L1 von 360 mm und einem Durchmesser D1 von 60 mm ergibt sich dabei eine ein erhöhtes Drehmoment bewirkende Resonanzfrequenz bei einer Drehzahl N von 3800 1/min. Bei weiter steigender Drehzahl N schließt die dem Gestell 46 zugeordnete Druckdose 57 die Steuerklappe 29. Das Resonanzvolumen ist auf z.B. 1,4 Liter reduziert. Daraus resultiert eine bei einer Drehzahl N von 4600 1/min liegende Resonanzfrequenz.
Ab Erreichen eines hohen Drehzahlbereiches wird durch Schließen der Drehklappe 51 der Behälter 23 abgekoppelt.

Im Betrieb der zusätzlich mit dem zweiten Resonanzrohr 31 ausgestatteten zweiten Variante der Erfindung sind im niedrigen Drehzahlbereich beide Drehklappen 51 und 52 geschlossen. Mit steigender Drehzahl N werden anschließend die Klappen 51, 52 und 29 in Registerschaltung derart betätigt, daß das angekoppelte Resonanzvolumen abnimmt.

Zunächst öffnet, vergleichbar der ersten Variante, die erste Drehklappe 51 ab einem mittleren Drehzahlbereich, die Steuerklappe 29 ist geöffnet. Die Länge L1 beträgt 300 mm, der Durchmesser D1 ist 48 mm, D2 beträgt 60 mm. Hieraus ergibt sich bei einem um das Volumen des Resonanzrohres 31 vergrößerten Resonanzvolumen eine erste Resonanzfrequenz bei einer Drehzahl N von 3500 1/min.

Im weiteren Verlauf öffnet zusätzlich Drehklappe 52. Hieraus resultiert bei einem Resonanzrohrdurchmesser D3 von 40 mm eine Resonanz bei einer Drehzahl N von 4100 1/min. Bei weiter steigender Drehzahl N wird durch Schließen der Steuerklappe 29 das Resonanzvolumen auf das Volumen der Kammer K1 reduziert. Hieraus resultiert eine Resonanz bei einer Drehzahl N von 4700 1/min.

Ab Erreichen des hohen Drehzahlbereiches wird der Behälter 23 durch Schließen der Drehklappen 51 und 52 abgekoppelt.

## Patentansprüche

1. Luftansaugvorrichtung für ein mehrzylindrige Brennkraftmaschine, vorzugsweise mit vier Zylindern in Reihenanordnung, mit einer eine Drosselklappe (13) aufweisenden und einen Ansaugluftstrom in einen Saugverteiler (11) führenden Ansaugleitung (15), wobei die Zylinder mit Einzelsaugrohren (9) an den Saugverteiler (11) angeschlossen sind,
und mit einem nicht durchströmten Behälter (23), welcher mit einem von einer Steuerung betätigten Ventilmittel z.B. eine Drehklappe (51), an den Ansaugluftstrom ankoppelbar ist, **dadurch gekennzeichnet,** daß der Saugverteiler (11) unter Zwischenschaltung eines Stutzens z.B. ein Klappengehäuse (21) und eine Gummimuffe (54) mit dem Behälter (23) verbunden ist, wobei ein im wesentlichen innerhalb des Behälters (23) angeordnetes Resonanzrohr (22) an den Stutzen angeschlossen ist.

2. Ansaugvorrichtung nach Anspruch 1, **dadurch gekennzeichnet,** daß der Behälter (23) eine erste und eine zweite Kammer (K1 und K2) aufweist, welche durch ein Absperrmittel z.B. eine Steuerklappe (29), verbindbar sind.

3. Ansaugvorrichtung nach Anspruch 2, **dadurch gekennzeichnet**, daß der stutzen als Klappengehäuse (21) ausgebildet ist, welches an eine einer Einlaßseite (6) der Brennkraftmaschine zugewandten Verbindungsöffnung (20) des Saugverteilers (11) angeschlossen ist und das Ventilmittel z.B. eine Drehklappe (51), umfaßt, und daß das Resonanzrohr (22) innerhalb der ersten Kammer (K1) angeordnet ist.

4. Ansaugvorrichtung nach Anspruch 3, **dadurch gekennzeichnet**, daß das Absperrmittel als Steuerklappe (29) ausgebildet ist, und daß innerhalb des Behälters (23) eine die Steuerklappe (29) aufnehmende, den Behälter (23) in die erste und die zweite Kammer (K1 und K2) teilende Trennwand (26) angeordnet ist.

5. Ansaugvorrichtung nach Anspruch 4, **dadurch gekennzeichnet**, daß ein weiterer, zwischengeschalteter Stutzen, z.B. ein zweites Klappengehäuse (34), und eine zweite Gummimuffe (54), den Saugverteiler (11) und den Behälter (23) verbindet, wobei dieser Stutzen an eine zweite Verbindungsöffnung (33) des Saugverteilers (11) angeschlossen ist und im Bereich der zweiten Kammer (K2) in eine Behälterwand (32) mündet.

6. Ansaugvorrichtung nach Anspruch 5, **dadurch gekennzeichnet,** daß innerhalb des Behälters (23) ein sich von dem weiteren Stutzen aus unter Durchdringung der Behälterwand (32) und der Trennwand (26) erstreckendes, zweites Resonanzrohr (31) angeordnet ist, dessen endseitige Öffnung (30) in der ersten Kammer (K1) liegt.

7. Ansaugvorrichtung nach Anspruch 5 oder 6, **dadurch gekennzeichnet,** daß an dem weiteren Stutzen als Ventilmittel eine zweite Drehklappe (52) angeordnet ist und daß die zweite Verbindungsöffnung (33) benachbart einer mit der Ansaugleitung (15) verbundenen Öffnung (12) des Saugverteilers (11) und die Verbindungsöffnung (20) benachbart dem der Öffnung (12) gegenüberliegenden Ende (17) des Saugverteilers (11) angeordnet ist.

8. Brennkraftmaschine mit einer Ansaugvorrichtung nach Anspruch 1, und einer auf einen Zylinderkopf (5) der Brennkraftmaschine aufgesetzten Zylinderkopfhaube (4), **dadurch gekennzeichnet,** daß der Behälter (23) eng benachbart einer die Zylinderkopfhaube (4) begrenzenden Ebene (E-E) und einer Motorhaubenlinie (M) angeordnet ist, wobei die Kammern (K1 und K2) bezüglich einer Längserstreckung (L) der Brennkraftmaschine hintereinanderliegend angeordnet sind.

9. Brennkraftmaschine nach Anspruch 8, **dadurch gekennzeichnet,** daß der Behälter (23) zweistückig aus einer Oberschale (24) und einer Unterschale (25) bestehend ausgebildet ist, welche in einer parallel zu der Ebene (E-E) verlaufenden Trennebene (T-T) miteinander verbunden sind, und daß die Resonanzrohre (22, 31) je hälftig in die Oberschale (24) und die Unterschale (25) eingelegt sind.

10. Ansaugvorrichtung nach Anspruch 5, **dadurch gekennzeichnet,** daß der zweite stutzen als zweites Klappengehäuse (34) ausgebildet ist, wobei das erste und zweite Klappengehäuse (21 und 34) als Gleichteile ausgebildet sind und jeweils ein Gestell (50) eine Klappenwelle (49), einen an der Klappenwelle (49) angeordneten Hebel (48) und je eine Drehklappe (51 und 52) aufweisen.

11. Ansaugvorrichtung nach Anspruch 4, **dadurch gekennzeichnet,** daß in der Trennwand (26) ein Einsatz (45) angeordnet ist, welcher ein eine Klappenwelle (47) lagerndes Gestell (46) und die auf der Klappenwelle (47) angeordnete Steuerklappe (29) und einen an der Klappenwelle (49) angeordneten Hebel (48) umfaßt.

12. Ansaugvorrichtung nach den Ansprüchen 10 und 11, **dadurch gekennzeichnet,** daß die Steuerung als eine ein Drehzahlsignal (N) der Brennnkraftmaschine aufnehmende Betätigungsvorrichtung (58) ausgebildet ist, welche mit an den Hebeln (48) angreifenden Druckdosen (57) derart zusammenwirkt, daß die Klappen (29, 51 und 52) separat in eine geöffnete Stellung verschwenkbar sind.

## Claims

1. An air-intake device for a multiple-cylinder internal-combustion engine, preferably with four cylinders arranged in line, with an intake line (15) comprising a throttle valve (13) and conducting an intake air stream into an intake manifold (11), wherein the cylinders are connected to the intake manifold (11) by individual intake pipes (9), and with a non-traversed container (23) which can be connected to the intake air stream by valve means, for example a hinged flap (51), actuated by a control, **characterized in that** the intake manifold (11) is connected to the container (23) by way of a connexion, for example a valve housing (21), and a rubber sleeve (54), wherein a resonance tube (22) arranged substantially inside the container (23) is connected to the connexion.

2. An intake device according to Claim 1, **characterized in that** the container (23) comprises a first and a second chamber (**K1** and **K2**) connectable by blocking means, for example a control flap (29)

3. An intake device according to Claim 2, **characterized in that** the blocking means is constructed in the form of a control flap (29), and the connexion is constructed in the form of a valve housing (21), which is connected to a connecting opening (20) in the intake manifold (11) facing one inlet side (6) of the internal-combustion engine and comprises the valve means, for example a hinged flap (51), and the resonance tube (22) is arranged inside the first chamber (**K1**).

4. An intake device according to Claim 3, **characterized in that** a partition wall (26) receiving the control flap (29) and dividing the container (23) into the first and the second chambers (**K1** and **K2**) is provided inside the container (23).

5. An intake device according to Claim 4, **characterized in that** a further, interposed connexion, for example a second flap housing (34), and a second rubber sleeve (54) connect the intake manifold (11) and the container (23), wherein the further connexion is connected to a second connecting opening (33) in the intake manifold (11) and opening into a container wall (32) in the region of the second chamber (**K2**).

6. An intake device according to Claim 5, **characterized in that** a second resonance tube (31), which extends from the further connexion so as to pass through the container wall (32) and the partition wall (26) and the end opening (30) of which is situated in the first chamber (**K1**), is arranged inside the container (23).

7. An intake device according to Claim 5 or 6, **characterized in that** a second hinged flap (52) is arranged on the further connexion as a valve means, and the second connecting opening (33) is arranged adjacent to an opening (12)-connected to the intake line (15) - in the intake manifold (11) and the connecting opening (20) is arranged adjacent to the end (17) of the intake manifold (11) opposite the opening (12).

8. An internal-combustion engine with an intake device according to Claim 1 and a cylinder-head cover (4) mounted on a cylinder head (5) of the internal-combustion engine, **characterized in that** the container (23) is arranged closely adjacent to a plane (**E-E**) bounding the cylinder-head cover (4) and to an engine-cover line (**M**), wherein the chambers **(K1** and **K2**) are arranged one behind the other with respect to a longitudinal extension (**L**) of the internal-combustion engine.

9. An internal-combustion engine according to Claim 8, **characterized in that** the container (23) is constructed in two parts, so as to comprise an upper shell (24) and a lower shell (25), the said shells being connected to each other in a separation plane (**T-T**) extending parallel to the plane (**E-E**), and the resonance tubes (22, 31) are each half inserted in the upper shell (24) and the lower shell (25).

10. An intake device according to Claim 5, **characterized in that** the second connexion is constructed in the form of a second flap housing (34), wherein the first and second flap housings (21 and 34) are constructed as similar parts and each comprise a frame (50), a flap shaft (49), a lever (48) mounted on the flap shaft (49) and a hinged flap (51 and 52) respectively.

11. An intake device according to Claim 4, **characterized in that** an insert (45) is provided in the partition wall (26), and comprises a frame (46) supporting a flap shaft (47), the control flap (29) mounted on the flap shaft (47) and a lever (48) mounted on the flap shaft (49).

12. An intake device according to Claims 10 and 11, **characterized in that** the control is constructed in the form of an actuating device (58) receiving a rotational speed signal (**N**) from the internal-combustion engine and cooperating in such a way with pressure boxes (57) engaging on the levers (48) that the flaps (29, 51 and 52) are pivotable separately into an opened position.

## Revendications

1. Dispositif d'admission d'air pour un moteur à combustion interne à plusieurs cylindres, de préférence avec quatre cylindres en ligne, avec une pipe d'admission (14) présentant un clapet d'étranglement (13) et menant un courant d'air d'admission dans un distributeur d'admission (11), les cylindres étant raccordés au distributeur d'aspiration (11) à l'aide de tubes d'aspiration individuels (9), et avec un récipient (23) , non parcouru par un écoulement et pouvant être couplé au courant d'air d'admission par un moyen formant soupape actionné par une commande, par exemple un clapet rotatif (51), caractérisé en ce que le distributeur d'admission (11) est relié au récipient (23) avec interposition d'une tubulure, par exemple un carter de clapet (21) et un manchon en caoutchouc (54), un tube de résonance (22) disposé sensiblement à l'intérieur du récipient (23) étant raccordé à la tubulure.

2. Dispositif d'admission selon la revendication 1, caractérisé en ce que le récipient (23) présente une première et une deuxième chambre (K1 et K2), pouvant être reliées à l'aide d'un moyen d'isolation, par exemple un clapet de commande (25).

3. Dispositif d'admission selon la revendication 2, caractérisé en ce que la tubulure est réalisée sous forme de carter de clapet (21) qui est raccordé à une ouverture de liaison (20), tournée vers le côté admission (6) du moteur à combustion interne, du distributeur d'aspiration (11) et comprenant le moyen formant soupape, par exemple un clapet rotatif (51), et en ce que le tube de résonance (22) est disposé à l'intérieur de la première chambre (K1).

4. Dispositif d'admission selon la revendication 3, caractérisé en ce que le moyen d'isolation est réalisé sous forme de clapet de commande, et à l'intérieur du récipient (23) est disposée une paroi de séparation (26), recevant le clapet de commande (29) et subdivisant le récipient (23) en la première et la deuxième chambres (K1 et K2).

5. Dispositif d'admission sel on la revendication 4, caractérisé en ce qu'une autre tubulure intermédiaire, par exemple un deuxième carter de clapet (34) et un deuxième manchon en caoutchouc (54), relie le distributeur d'admission (11) et le récipient (23), sa tubulure étant raccordée à une deuxième ouverture de liaison (23) du distributeur d'aspiration (11) et débouche dans la zone de la deuxième chambre (K2), dans une paroi de récipient (32).

6. Dispositif d'admission sel on la revendication 5, caractérisé en ce qu'à l'intérieur du récipient (23) est disposé un deuxième tube de résonance (31) s'étendant de la deuxième tubulure en traversant la paroi de récipient (32) et la paroi de séparation (26), tube de résonance dont l'ouverture (30) située côté extrémité est située dans la première chambre (K4).

7. Dispositif d'admission selon la revendication 5 ou 6, caractérisé en ce que sur la deuxième tubulure est disposé; à titre de moyen formant soupape, un deuxième clapet rotatif (52) et en ce que la deuxième ouverture de liaison (33) est réalisée au voisinage d'une ouverture (12) reliée à la conduite d'admission (15) du distributeur d'admission (11) et l'ouverture de liaison (20) est disposée au voisinage de l'extrémité (17), opposée à l'ouverture (12), du distributeur d'admission (11).

8. Moteur à combustion interne avec un dispositif d'admission selon la revendication 1 et un capot de culasse (4) monté sur une culasse (5) du moteur à combustion interne, caractérisé en ce que le récipient (23) est étroitement voisin d'un plan (E-E) délimitant le capot de culasse (4) et d'une ligne de capot moteur (M), les chambres (K1 et K2) étant disposées l'une derrière l'autre par rapport à la direction longitudinale (L) du moteur à combustion interne.

9. Moteur à combustion interne selon la revendication 8, caractérisé en ce que le récipient (23) est réalisé en deux pièces, une coque supérieure (24) et une coque inférieure (25), reliées ensemble dans un plan de séparation (T-T) s'étendant parallèlement au plan (E-E), et en ce que les tubes de résonance (22, 31) sont insérés chacun pour moitié dans la coque supérieure (24) et dans la coque inférieure (25).

10. Dispositif d'admission selon la revendication 5, caractérisé en ce que la deuxième tubulure est réalisée à titre de deuxième carter de clapet (34), le premier et le deuxième carter de clapet (21) et (34) étant réalisés sous forme de pièces identiques et présentent chacun un bâti (30), un arbre de clapet (49), un levier (48) disposé sur l'arbre de clapet (49) et chacun un clapet rotatif (51, 52).

11. Dispositif d'admission selon la revendication 4, caractérisé en ce que dans la paroi de séparation (26) est disposée une garniture (45) entourant le bâti (46) servant au tourillonnement de l'arbre de clapet (47) et le clapet de commande (29) disposé sur l'arbre de clapet (47) et un levier (48) disposé sur l'arbre de clapet (49).

12. Dispositif d'admission selon la revendication 10 et 11, caractérisé en ce que la commande est réalisée sous forme de dispositif d'actionnement (58) recevant un signal de vitesse de rotation (N) du moteur à combustion interne et coopérant avec des capsules à pression (57) agissant sur les leviers (48), de manière que les clapets (29, 51 et 52) puissent pivoter séparément en position ouverte.
